# EUROPEAN PATENT SPECIFICATION

(11) **EP 3 076 635 B1**
(45) Date of publication and mention of the grant of the patent: **30.08.2017**
(21) Application number: 16158123.6
(22) Date of filing: 01.03.2016
(51) Int. Cl.: H04L 29/08, G06F 17/30, H04L 12/24, H04L 29/14, H04W 48/16, H04W 84/12

(54) **SERVICE REDUNDANCY METHOD, PROGRAM, STORAGE MEDIUM, INFORMATION PROCESSING APPARATUS, AND SYSTEM**
DIENSTREDUNDANZVERFAHREN, PROGRAMM, SPEICHERMEDIUM, INFORMATIONSVERARBEITUNGSVORRICHTUNG UND SYSTEM
PROCÉDÉ DE REDONDANCE DE SERVICE, PROGRAMME, SUPPORT DE STOCKAGE, APPAREIL DE TRAITEMENT D'INFORMATIONS ET SYSTÈME

(30) Priority: 02.04.2015 JP 2015075852
(43) Date of publication of application: 05.10.2016
(73) Proprietor: FUJITSU LIMITED, Kawasaki-shi, Kanagawa 211-8588 (JP)
(72) Inventor: NISHIGUCHI, Naoki, Kawasaki-shi, Kanagawa 211-8588 (JP); FUJII, Akira, Kawasaki-shi, Kanagawa 211-8588 (JP)
(74) Representative: Cooper-Rolfe, Elizabeth Louise

(56) References cited:
- EP-A1- 2 591 590
- US-A1- 2010 074 236
- US-A1- 2011 086 646

## Description

### [FIELD]

The present invention discussed herein is related to a service redundancy method, a program, a storage medium, an information processing apparatus, and a system.

### [BACKGROUND]

In a large-scale server, hardware is caused to be redundant and switching to redundant hardware is performed when hardware Is in a trouble, and thus a service is caused to continue. In software, a service is caused to be redundant between servers and a state of the service is synchronized, and thus a server is switched when the server is in a trouble and the service is caused to continue.

EP2591590 A1 discloses dynamically assigning standby or survivability servers to wireless mobile devices. When devices move location a primary server may dynamically assign a survivability server based on the device location. The device authenticates with the primary server and sends location (network id, IP, MAC, position, address etc) information to the primary server which determines the standby server and informs the device which standby to use in the event that the primary server fails. However the device can only be assigned a standby server by the primary server. Moreover, the assignment of the standby server does not take into consideration the wireless connectivity of the device, thus it cannot be assured that a viable standby server is assigned.

### [CITATION LIST]

### [PATENT LITERATURE]

[PATENT LITERATURE 1] Japanese Laid-open Patent Publication No. 2014-112908
[PATENT LITERATURE 2] Japanese Laid-open Patent Publication No. 2007-11569

### [SUMMARY]

### [TECHNICAL PROBLEM]

However, because redundancy of the hardware is expensive, mounting of redundant hardware in a small server which is installed in different sites is difficult. In redundancy of the software, synchronization processing in accordance with multiplicity of redundancy of a service is desirable every time an attempt to gain access to the service is performed. Thus, if a server has a configuration in which a service is normally caused to be redundant, the server has to have capacity equal to or greater than capacity desirable for providing of the service. Because a server in which redundancy is performed has to be fixedly prepared regardless of whether or not the server is used, a system configuration for redundancy is ineffective.

According to an embodiment of one aspect of the present invention, it is desirable to improve efficiency of redundancy of a service.

### [SOLUTION TO PROBLEM]

The invention is directed to a service redundancy method according to claim 1.

### [ADVANTAGEOUS EFFECTS OF INVENTION]

According to an embodiment of one aspect of the invention, efficiency of redundancy of a service is improved.

### [BRIEF DESCRIPTION OF DRAWINGS]

The invention is described, by way of example only, with reference to the following drawings, in which:
FIG. 1 illustrates a system configuration example of an embodiment;
FIG. 2 illustrates an initial state;
FIG. 3 is a diagram illustrating a process performed when a certain terminal is coupled to a certain server;
FIG. 4 is a diagram illustrating a process performed when another terminal is coupled to the same server;
FIG. 5 is a diagram illustrating a process performed when still another terminal is coupled to the same server;
FIG. 6 illustrates a state where the server as a connecting destination normally provides a service without a problem;
FIG. 7 is a diagram illustrating a process performed in a case where some terminals cut off coupling with the server;
FIG. 8 is a diagram illustrating a process performed in a case where all terminals cut off coupling with the server;
FIG. 9 is a diagram illustrating a process performed in a case where the server as the connecting destination is in a trouble;
FIG. 10 illustrates a hardware configuration example of the server in the embodiment;
FIG. 11 illustrates a functional configuration example of the terminal and the server in the embodiment;
FIG. 12 is a flowchart illustrating an example of processing procedures performed by a connecting management unit when coupling to the server is performed;
FIG. 13 illustrates a configuration example of connecting destination information;
FIG. 14 is a flowchart illustrating an example of processing procedures performed after the connecting management unit transmits a connecting request;
FIG. 15 illustrates a configuration example of an application connecting-destination storage unit;
FIG. 16 illustrates a configuration example of connecting destination-in-trouble information;
FIG. 17 is a flowchart illustrating an example of processing procedures performed by a proxy unit;
FIG. 18 illustrates a configuration example of an application information storage unit;
FIG. 19 is a flowchart illustrating an example of processing procedures performed by a terminal connecting management unit;
FIG. 20 illustrates a configuration example of terminal connecting information;
FIG. 21 illustrates a configuration example of an SSID/server correspondence storage unit;
FIG. 22 is a flowchart illustrating an example of processing procedures performed by a redundancy-destination determination unit;
FIG. 23 illustrates a configuration example of redundancy destination information; and
FIG. 24 is a flowchart illustrating an example of processing procedures performed by a redundancy management unit.

### [DESCRIPTION OF EMBODIMENTS]

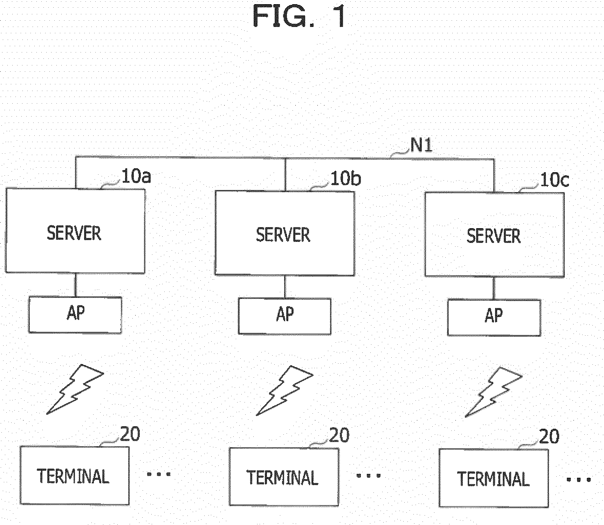

Hereinafter, an embodiment will be described with reference to the accompanying drawings. FIG. 1 illustrates a system configuration example of the embodiment. In FIG. 1, a plurality of servers 10 of a server 10a, a server 10b, a server 10c, and the like corresponds to computers such as personal computers (PC), which are respectively disposed in fixed locations. An interval between the servers 10 may vary. Each of the servers 10 is coupled to an access point AP for wireless communication, which is exclusively used for the corresponding server. That is, each of the servers 10 and each of access points AP form a pair. For example, each of the access points AP may be built in each of the servers 10. Each of the servers 10 can provide a predetermined service for a terminal 20 which is in a range of radio waves of the corresponding access point AP. Services provided by the servers 10 may be the same or different from each other. However, the services are configured so that the service to be operated by the server 10 which is in trouble may be coupled to the other server 10 and be provided by the other server if any of the servers 10 is in a trouble. Thus, the servers 10 are coupled to each other through a network N1 such as a local area network (LAN), so as to enable communication with each other.

For example, the servers 10 may be respectively disposed in classrooms, in a case where this system is operated in a school. In this case, each of the servers 10 may provide a learning service. Terminals 20 may be respectively used by students. Examples of the terminal 20 include a smart phone, a tablet terminal, a personal computer (PC), and the like. The servers 10 may be used in places other than the school. For example, the servers 10 may be disposed in fixed locations such as stores and event sites. In this case, each of the servers 10 may provide a terminal 20 with a list of goods or events which are handled in the section in which the corresponding server 10 is disposed.

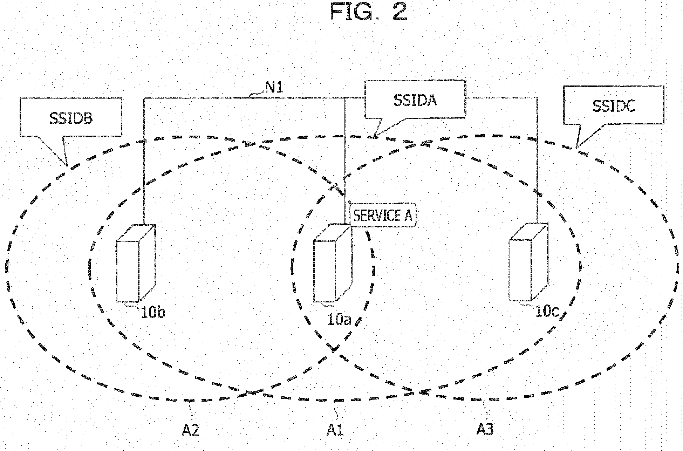

The outline of the embodiment will be described with reference to FIGs. 2 to 9. FIG. 2 illustrates an initial state. In FIG. 2, a range of radio waves (of an access point AP) of each of the servers 10 is indicated by an elliptical broken line. That is, an area A1 corresponds to a range of radio waves for the server 10a, an area A2 corresponds to a range of radio waves for the server 10b, and an area A3 corresponds to a range of radio waves for the server 10c. A service set identifier (SSID) of an access point AP of the server 10a is set to be "SSIDA". A SSID of an access point AP of the server 10b is set to be "SSIDB". A SSID of an access point AP of the server 10c is set to be "SSIDC".

FIG. 2 illustrates that a service A is operated by the server 10a. A service 11 unique to each of the server 10b and the server 10c may also be operated by the corresponding server.

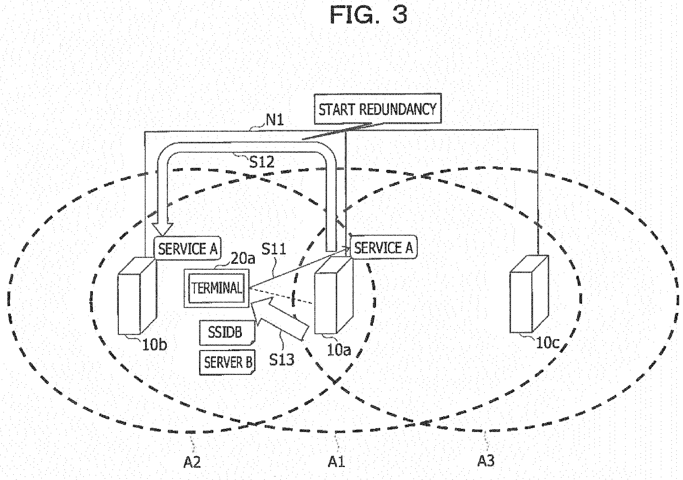

FIG. 3 is a diagram illustrating a process performed when a certain terminal is coupled to a certain server. FIG. 3 illustrates an example in which a terminal 20a is coupled to the server 10a. If the terminal 20a is coupled to the server 10a, the terminal 20a notifies the server 10a of wireless SSIDs (SSIDA and SSIDB) which are allowed to be detected by the terminal 20a (S11). The server 10a specifies the server 10b based on the SSIDB and starts redundancy of the service A to the server 10b (S12). That is, each of the servers 10 holds correspondence information of the SSIDs and the servers 10. The server 10a selects the server 10b as a substitute server used when the server 10a is in a trouble (when use of the server 10a is not allowed), and notifies the terminal 20a of the SSIDB and identification information (for example, IP address) of the server 10b as a connecting destination when a trouble occurs (S13). This notification indicates that coupling to the server 10b via the access point AP identified by the SSIDB is desirable.

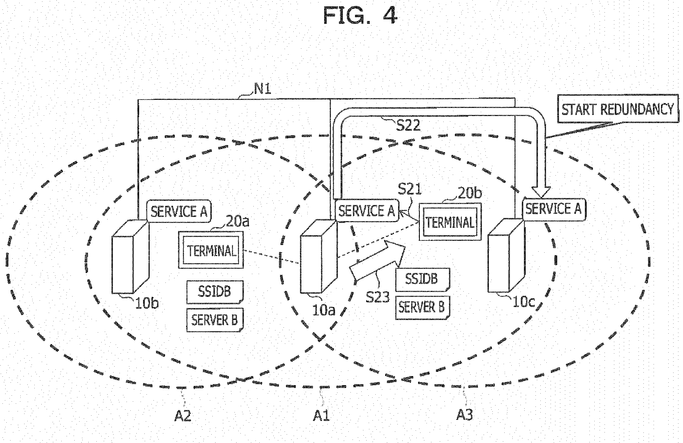

FIG. 4 is a diagram illustrating a process performed when another terminal is coupled to the same server. FIG. 4 illustrates an example in which a terminal 20b is coupled to the server 10a. If the terminal 20b is coupled to the server 10a, the terminal 20b notifies the server 10a of wireless SSIDs (SSIDA and SSIDC) which are allowed to be detected by the terminal 20b (S21). The server 10a specifies the server 10c based on the SSIDC and starts redundancy of the service A to the server 10c (S22). The server 10a selects the server 10b as a substitute server used when the server 10a is in a trouble, and notifies the terminal 20b of the SSIDC and identification information (for example, IP address) of the server 10b as a connecting destination when a trouble occurs (S23). This notification indicates that coupling to the server 10b via the access point AP identified by the SSIDC is desirable. The server 10c may be selected as the substitute server. In a case where the server 10b is selected as the substitute server, redundancy to the server 10c may not be preferably performed.

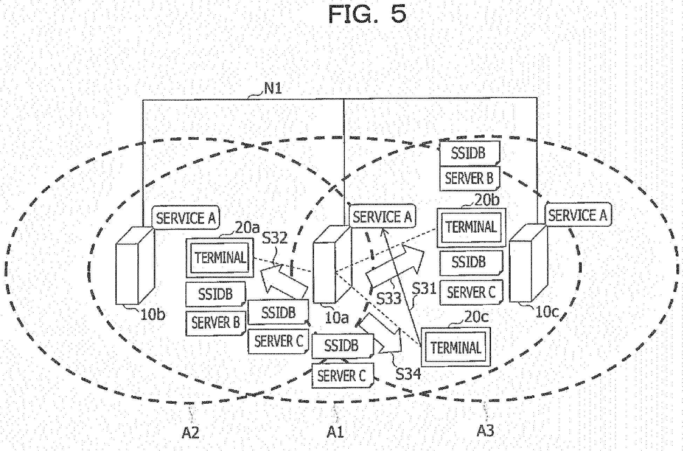

FIG. 5 is a diagram illustrating a process performed when still another terminal is coupled to the same server. FIG. 5 illustrates an example in which a terminal 20c is coupled to the server 10a. If the terminal 20c is coupled to the server 10a, the terminal 20c notifies the server 10a of wireless SSIDs (SSIDA and SSIDC) which are allowed to be detected by the terminal 20c (S31). The server 10a specifies the server 10c based on the SSIDC, but because a start of the redundancy of the service A to the server 10c is complete, redundancy processing is not performed. The server 10a selects the server 10c as the substitute server of the server 10a when the server 10a is in a trouble. Here, the reason of the server 10c being selected is, for example, because the most terminals 20 are in the area A3 relating to the server 10c at the current point of time. The server 10a notifies the terminal 20a of the SSIDB and identification information of the server 10c as the connecting destination when a trouble occurs (S32), notifies the terminal 20b of the SSIDC and identification information of the server 10c (S33), and notifies the terminal 20c of the SSIDC and the identification information of the server 10c (S34). That is, since the substitute server has been changed, the terminal 20a and the terminal 20b are notified that the server 10c is the substitute server. At this time, redundancy to the server 10b may be ended.

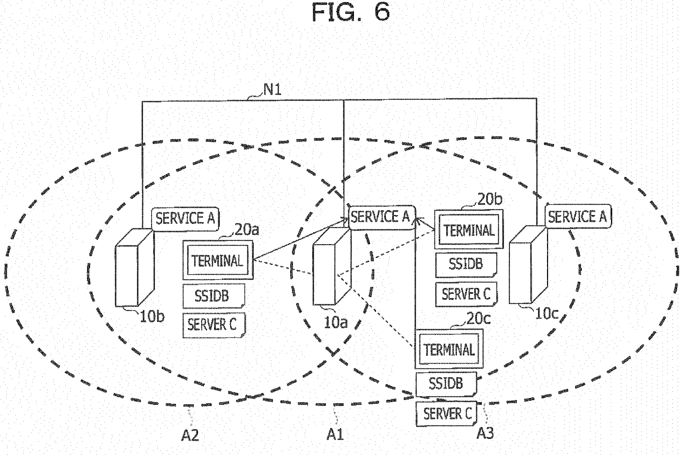

FIG. 6 illustrates a state where the server as a connecting destination normally provides the service 11 without a problem. FIG. 6 illustrates a state where the service A is normally provided for each of the terminals 20 in a state where the terminal 20a, the terminal 20b, and the terminal 20c are coupled to the server 10a. The each of the terminals 20 holds information which is received in FIG. 5 and indicates a connecting destination of the server 10a when the server 10a is in a trouble.

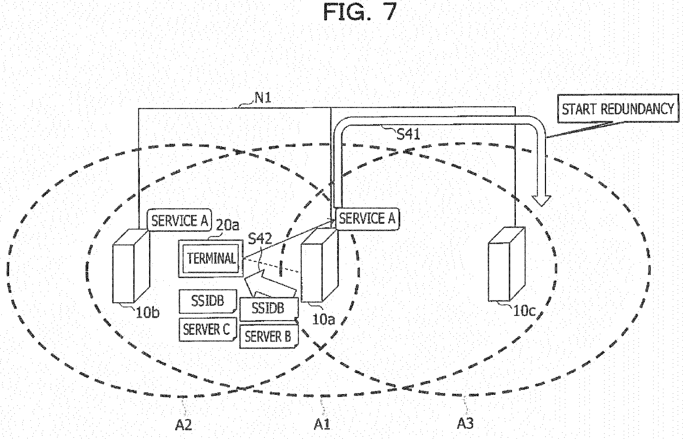

FIG. 7 is a diagram illustrating a process performed in a case where some of the terminals cut off coupling with the server. FIG. 7 illustrates an example in which the terminal 20b and the terminal 20c cut off coupling with the server 10a. In this case, the server 10a selects the server 10b as the substitute server when a trouble occurs and releases redundancy to the server 10c (S41). The server 10a notifies the terminal 20a of the SSIDB and the identification information of and the server 10b as the connecting destination when a trouble occurs (S42). The reason of the substitute server being changed from the server 10c to the server 10b is, for example, because the number of terminals 20 in the area A2 relating to the server 10b is the maximum.

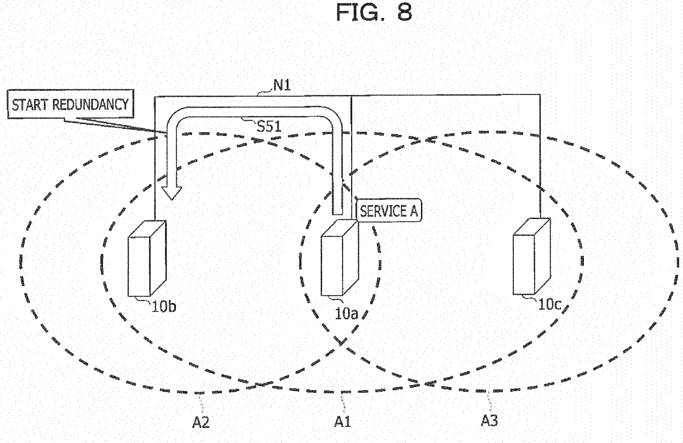

FIG. 8 is a diagram illustrating a process performed in a case where all of the terminals cut off the coupling with the server. If the terminal 20a cuts off coupling with the server 10a, the server 10a releases redundancy to the server 10b and ends the redundancy.

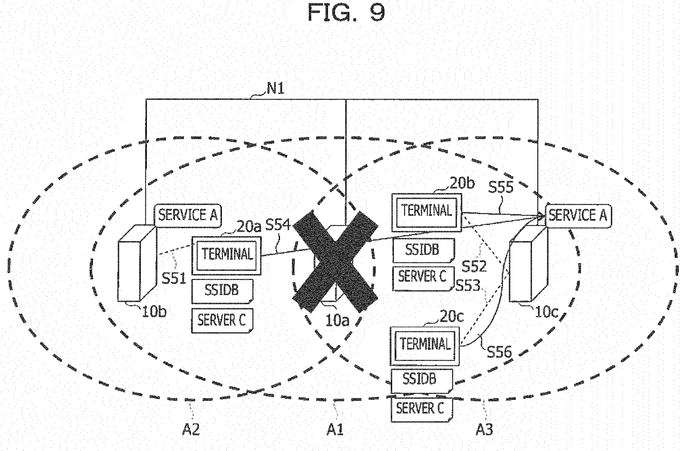

FIG. 9 is a diagram illustrating a process performed in a case where the server as the connecting destination is in a trouble. FIG. 9 illustrates a state where the server 10a is in a trouble in the state of FIG. 6. In this case, coupling of each of the terminal 20a, the terminal 20b, and the terminal 20c is cut off from the access point AP relating to the SSIDA. Thus, each of the terminals 20 switches the connecting destination with reference to information of the connecting destination of the server 10a when the server 10a is in a trouble, which has been received last. Specifically, the terminal 20a is coupled to the server 10c via the access point AP of the server 10b relating to the SSIDB (S51 and S54). The terminal 20b and the terminal 20c are coupled to the server 10c via the access point AP of the server 10c relating to the SSIDC (S52, S55, S53, and S56). As a result, each of the terminals 20 can use the service A which is subjected to redundancy in the server 10c.

As described above, in the embodiment, a certain terminal 20 using the server 10a causes the service A to be redundant, and all of the terminals 20 ending use of the server 10a causes the redundancy of the service A to be ended. Thus, it is possible to suppress an increase in costs of redundancy and to continuously provide the service 11 when the server 10 is in a trouble.

The terminal 20 and the server 10 will be specifically described.

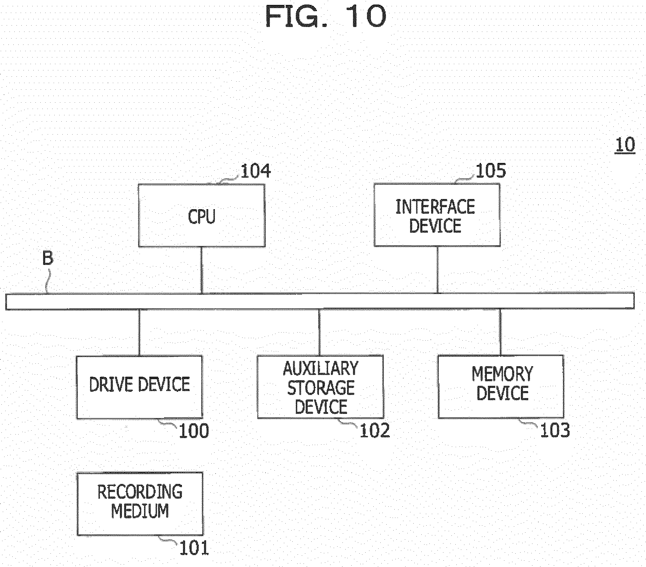

FIG. 10 illustrates a hardware configuration example of the server in the embodiment. In FIG. 10, the server 10 includes a drive device 100, an auxiliary storage device 102, a memory device 103, a CPU 104, an interface device 105, and the like which are coupled to each other through a bus B.

A program which executes processes in the server 10 is provided by a recording medium 101. If the recording medium 101 in which the program is recorded is set in the drive device 100, the program is installed on the auxiliary storage device 102 from the recording medium 101 through the drive device 100. The installation of the program is not preferably performed through the recording medium 101, and the program may be installed by downloading the program from other computers through a network. The auxiliary storage device 102 stores the installed program and stores desirable files, data or the like.

The memory device 103 reads the program from the auxiliary storage device 102 and stores the read program, in a case where an instruction for starting the program is received. The CPU 104 performs functions relating to the server 10, in accordance with the program stored in the memory device 103. The interface device 105 is used as an interface for coupling to the network.

Examples of the recording medium 101 include a portable recording medium such as a CD-ROM, a DVD disc, or a USB memory. Examples of the auxiliary storage device 102 include a hard disk drive (HDD) and a flexible memory. Any of the recording medium 101 and the auxiliary storage device 102 corresponds to a computer-readable recording medium.

The terminal 20 also includes hardware as illustrated in FIG. 10. It is desirable that the terminal 20 desirably includes a display device such as a liquid crystal panel, or an input device such as a touch panel, a keyboard, or a mouse.

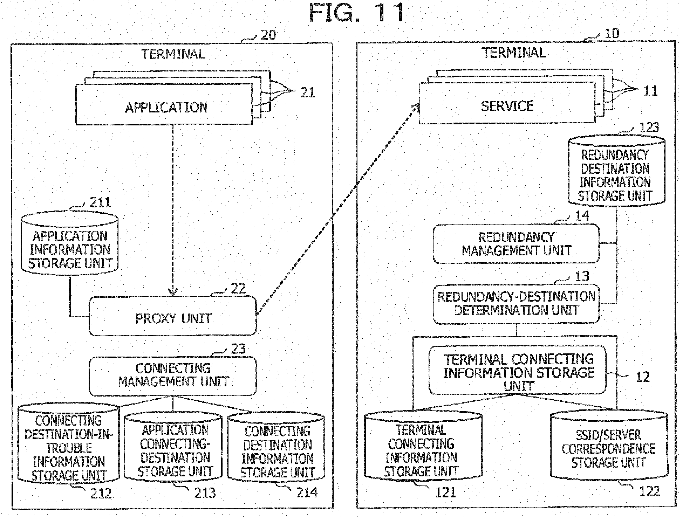

FIG. 11 illustrates a functional configuration example of the terminal and the server in the embodiment. In FIG. 11, the terminal 20 includes a proxy unit 22 and a connecting management unit 23. The program installed on the terminal 20 is executed by the CPU of the terminal 20, and thereby these units are realized. The terminal 20 includes an application information storage unit 211, a connecting destination-in-trouble information storage unit 212, an application connecting-destination storage unit 213, a connecting destination information storage unit 214, and the like. These storage units may be realized by using a memory of the terminal 20 or the auxiliary storage device of the terminal 20, for example. In the terminal 20, one or more applications 21 are operated.

Each of the applications 21 corresponds to an application program. Each of the applications 21 causes the service 11 operated by the server 10 to be performed and used in the terminal 20.

The proxy unit 22 controls the connecting destination of the service 11 used by the application 21 with reference to the application information storage unit 211. The application information storage unit 211 stores information indicating a destination of the service 11 which is set as the connecting destination at the current time, for each of the application 21 in operation.

The connecting management unit 23 manages coupling with the server 10 through wireless communication. The connecting destination-in-trouble information storage unit 212 stores information indicating the server 10 as a substitute destination in a case where use of the server 10 as the connecting destination is not allowed. The information is received from the server 10 as the connecting destination.

The application connecting-destination storage unit 213 stores information indicating a destination of the service 11 set as the connecting destination, for each of the applications 21, in advance. The connecting destination information storage unit 214 stores address information of the server 10 to be set as the connecting destination by the terminal 20 in advance.

The server 10 includes a terminal connecting management unit 12, a redundancy-destination determination unit 13, a redundancy management unit 14, and the like. One or more programs installed on the server 10 are executed by the CPU 104, and thereby these units are realized. In the server 10, a terminal connecting information storage unit 121, an SSID/server correspondence storage unit 122, a redundancy destination information storage unit 123, and the like are used. Theses storage units may be realized by using the memory device 103 or the auxiliary storage device 102 included in the server 10, a storage device which is allowed to be coupled to the server 10 through a network, and the like. The server 10 operates one or more services 11.

The service 11 corresponds to the service 11 provided for the terminal 20. The terminal connecting management unit 12 manages coupling with the terminal 20 which uses the service 11 of the server 10. The terminal connecting information storage unit 121 stores information and the like indicating the server 10 set as the connecting destination or the substitute destination of the terminal 20, for each of terminals 20 coupled to the server 10. The redundancy-destination determination unit 13 performs determination and the like of a redundancy destination in a case where use of the server 10 is not allowed. The redundancy management unit 14 performs release and the like of redundancy of the service 11 to a redundancy destination which is determined by the redundancy-destination determination unit 13, or redundancy of the service 11 as the redundancy destination. The redundancy destination information storage unit 123 stores information regarding each redundancy destination. The SSID/server correspondence storage unit 122 stores the correspondence information of the SSIDs and the servers 10.

Processing procedures performed by each of the terminals 20 and the servers 10 will be described below. First, a process performed by the terminal 20 will be described.

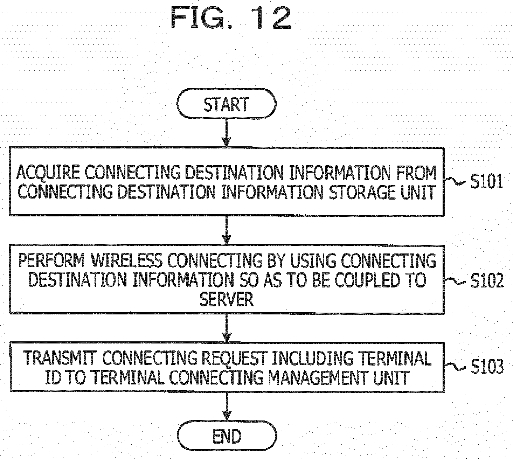

FIG. 12 is a flowchart illustrating an example of processing procedures performed by the connecting management unit when coupling to the server is performed.

For example, a user inputs an instruction of coupling to the server 10. The connecting management unit 23 acquires connecting destination information from the connecting destination information storage unit 214 in accordance with the input of the instruction by the user (S101).

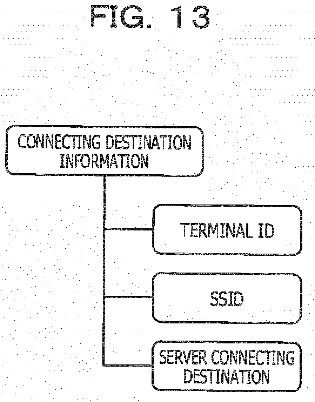

FIG. 13 illustrates a configuration example of connecting destination information. As illustrated in FIG. 13, the connecting destination information includes items of a terminal ID, an SSID, a server connecting destination, and the like. The terminal ID corresponds to identification information of the terminal 20. The SSID corresponds to an SSID of an access point AP with which coupling is desirable. A pass phrase may be stored along with the SSID. The server connecting destination corresponds to information indicating a server 10 to which coupling is desirable. The server connecting destination corresponds to an IP address, a URL, for example.

The connecting destination information is preset and stored in the connecting destination information storage unit 214. That is, in each of the terminals 20, the server 10 as a connecting destination is preset. For example, in a school, or in the terminal 20 of a student belonging to a class, the server 10 installed in the class may be set as the connecting destination.

The connecting management unit 23 is wirelessly coupled to an access point AP having an SSID of the acquired connecting destination information, and is coupled to the server 10 specified by using the server connecting destination of the connecting destination information (S102). The connecting management unit 23 transmits a connecting request including a terminal ID which is included in the connecting destination information, to the terminal connecting management unit 12 of the server 10 set as a connecting destination (S103).

The terminal ID may not be included in the connecting destination information. For example, the terminal ID may be automatically generated based on information specific to each of the terminals 20. The process in FIG. 12 may be performed once when coupling to the server 10 is performed.

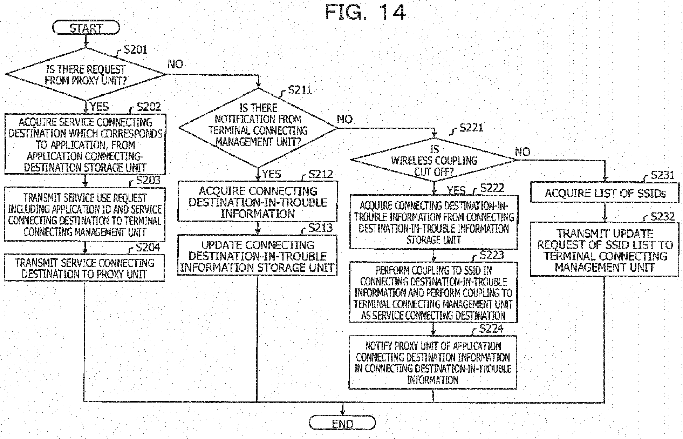

A process performed after the connecting management unit 23 transmits a connecting request will be described. FIG. 14 is a flowchart illustrating an example of processing procedures performed after the connecting management unit transmits a connecting request.

The connecting management unit 23 performs processing based on a request (S201) from the proxy unit 22, a notification (S211) from the terminal connecting management unit 12 of the server 10, a change (S221) of a wireless connecting situation, or the like. The connecting management unit 23 periodically (NO in S221) scans a radio wave for the wireless communication and acquires a list of SSIDs of radio waves enabled to be detected from the terminal 20 (S231).

In case of periodically acquiring a list of SSIDs, the connecting management unit 23 transmits an update request for an SSID list to the terminal connecting management unit 12 of the server 10 in which coupling is performed in FIG. 12, in order to cause an updated list to include the terminal ID of the terminal 20 and the list of SSIDs (S232). This transmission corresponds to, for example, the process in which the terminal 20a notifies the server 10a of the SSIDA and SSIDB in Step S11 of FIG. 3.

The request (S201) from the proxy unit 22 corresponds to an inquiry request of the service 11 of which it is desirable to set the application 21 as an access destination. The inquiry request is received from the proxy unit 22 which receives an access request to the service 11 from the application 21. The inquiry request includes an application ID which corresponds to identification information of the application 21 as a source of the access request. If such an inquiry request is received (YES in S201), the connecting management unit 23 acquires a service connecting destination which corresponds to an application ID included in the inquiry request, from the application connecting-destination storage unit 213 (S202).

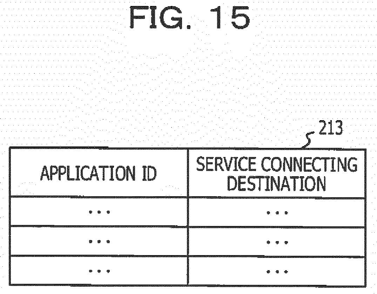

FIG. 15 illustrates a configuration example of the application connecting-destination storage unit. As illustrated in FIG. 15, the application connecting-destination storage unit 213 stores an application ID and a service connecting destination which correspond to each other, for each of the applications 21 installed on the terminal 20. The application ID corresponds to identification information of each of the applications 21. The service connecting destination information corresponds to a destination of the service 11 used by the application 21. An example of the destination of the service 11 includes a uniform resource locator (URL). The service connecting destination may include a plurality of values (for example, a plurality of URLs). For example, when the application 21 is installed, a record relating to the application 21 may be stored in the application connecting-destination storage unit 213.

The connecting management unit 23 transmits a use request of the service 11 to the terminal connecting management unit 12 of a server10 in which coupling is performed in FIG. 12 (S203). The use request of the service 11 includes a terminal ID of the terminal 20, an application ID included in the inquiry request, and the acquired service connecting destination. The connecting management unit 23 transmits the service connecting destination to the proxy unit 22 (S204).

The notification (S211) from the terminal connecting management unit 12 of the server 10 corresponds to, for example, a notification of information (connecting destination-in-trouble information) which is described in Step S13 of FIG. 3 and indicates a connecting destination of the server 10 when a trouble occurs. If the notification is received (YES in S211), the connecting management unit 23 acquires connecting destination-in-trouble information included in the received notification (S212).

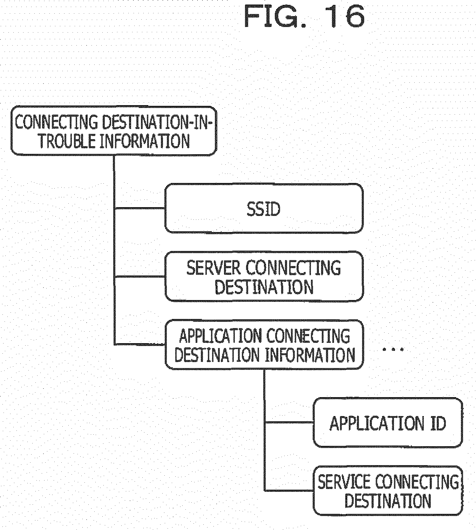

FIG. 16 illustrates a configuration example of the connecting destination-in-trouble information. In FIG. 16, the connecting destination-in-trouble information includes an SSID, a server connecting destination, an application connecting destination information, and the like. The SSID corresponds to an SSID of an access point AP to which coupling is desirable when the server 10 in the process of coupling is in a trouble. The server connecting destination corresponds to an IP address, a URL, or the like of a substitute server. The application connecting destination information includes an application ID and a service connecting destination. The application ID corresponds to an application ID of the application 21 which uses the application connecting destination information as a target. The service connecting destination corresponds to a destination of the service 11 which is desirably set as an access destination by the application 21 when the server 10 in the process of coupling is in a trouble. That is, the service connecting destination corresponds a destination of the service 11 on the substitute server. The application connecting destination information is included in the connecting destination-in-trouble information of each of the applications 21 operated in the terminal 20. For example, the application connecting destination information forms an array structure or a list structure.

The reason that the connecting destination-in-trouble information includes the application connecting destination information is because a connecting destination of the service 11 is managed for each of the applications 21 in the embodiment.

The connecting management unit 23 updates stored contents of the connecting destination-in-trouble information storage unit 212 by using the acquired connecting destination-in-trouble information (S213). That is, in a case where the connecting destination-in-trouble information has been already stored in the connecting destination-in-trouble information storage unit 212, the existing connecting destination-in-trouble information is overwritten by new connecting destination-in-trouble information.

The change (S221) of the wireless connecting situation means that cutoff of wireless connecting with the access point AP of the server 10 due to a trouble or the like of the server 10 in the process of coupling is detected. If the connecting management unit 23 detects cutoff of the wireless connecting (YES in S221), the connecting management unit 23 acquires connecting destination-in-trouble information from the connecting destination-in-trouble information storage unit 212 (S222). The connecting management unit 23 is wirelessly coupled to an access point AP relating to an SSID in the acquired connecting destination-in-trouble information and is coupled to the server 10 specified by using a server connecting destination in the acquired connecting destination-in-trouble information (S223). The connecting management unit 23 notifies the proxy unit 22 of application connecting destination information in the connecting destination-in-trouble information (S224). This notification is performed in order to cause the application 21 to access the service 11 of the server 10 set as a substitute destination.

In the descriptions, the cutoff of the wireless connecting is exemplified. However, in a case where gaining an access of the proxy unit 22 to the service 11 fails, the proxy unit 22 may notify the connecting management unit 23 that use of the service 11 is not allowed. In this case, the connecting management unit 23 may perform the processes of Steps S222 to S224. That is, determination of whether the server 10 in the process of coupling is in a trouble (use is not allowed) may be performed based on factors other than the cutoff of the wireless connecting.

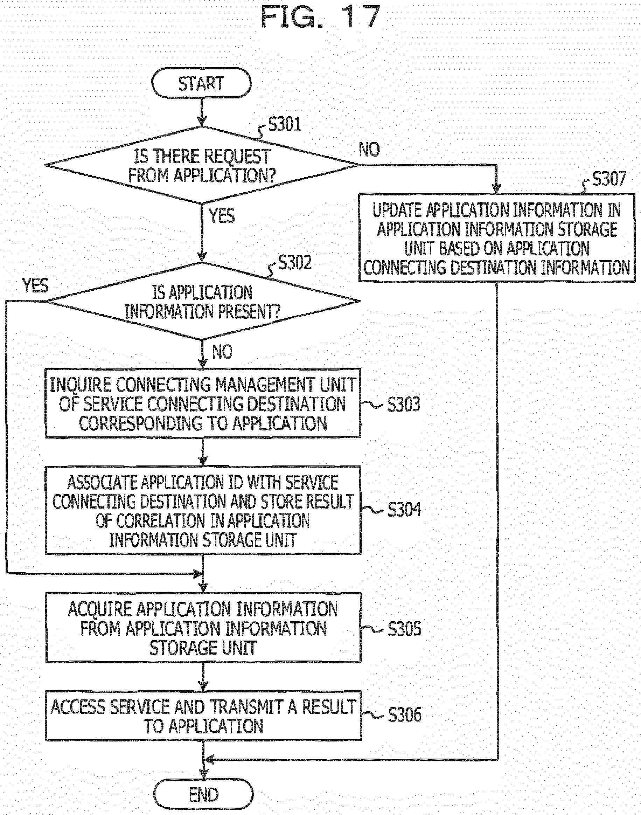

A process performed by the proxy unit 22 of the terminal 20 will be described. FIG. 17 is a flowchart illustrating an example of processing procedures performed by the proxy unit.

The proxy unit 22 waits for an access request from the application 21 to the service 11 or a notification of the application connecting destination information from the connecting management unit 23 (S301). The access request to the service 11 from the application 21 includes details of an access (details of the request for the service 11) and an application ID used for identifying the application 21. If the proxy unit 22 receives the access request to the service 11 from the application 21 (YES in S301), the proxy unit 22 determines whether or not application information corresponding to the application 21 is stored in the application information storage unit 211 (S302).

In a case where the application 21 accesses the service 11 for the first time, application information corresponding to the application 21 is not stored in the application information storage unit 211 (NO in S302). Thus, in this case, the proxy unit 22 transmits an inquiry request of information (service connecting destination) which indicates the service 11 set as a connecting destination corresponding to the application 21, to the connecting management unit 23 (S303). In the inquiry request, an application ID which is identification information of the application 21 is designated. The connecting management unit 23 performs the processes of Steps S202 to S204 in FIG. 14, in accordance with the inquiry request.

If the connecting destination information is transmitted from the connecting management unit 23, the proxy unit 22 associates the application ID of the application 21 with the service connecting destination and stores a result of correlation in the application information storage unit 211 (S304).

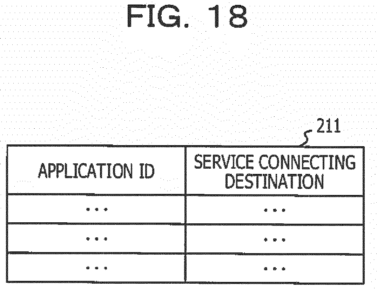

FIG. 18 illustrates a configuration example of the application information storage unit. The configuration of the application information storage unit 211 is similar to that of the application connecting-destination storage unit 213 (FIG. 15) except that the application information storage unit 211 stores only information regarding the application 21 in the process of being operated. Lines in FIG. 18 correspond to the application information.

After the process of Step S304 is performed, the process proceeds to Step S305.

In a case where the application information corresponding to the application ID which is included in the access request is stored in the application information storage unit 211 (YES in S302), the processes of Steps S303 and S304 are not performed and the process proceeds to Step S305.

In Step S305, the proxy unit 22 acquires the application information corresponding to the application ID which is included in the access request, from the application information storage unit 211. The proxy unit 22 performs an access in response to the access request to the service 11 identified by using a service connecting destination in the application information, and transmits an access result to the application 21 (S306). The access in response to the access request means that a request included in the access request is transmitted to the service 11. The access result corresponds to a response transmitted from the service 11 in accordance with the request.

If the notification of the application connecting destination information is performed from the connecting management unit 23 in Step S224 of FIG. 14 (NO in S301), the proxy unit 22 updates the application information stored in the application information storage unit 211 based on the application connecting destination information (S307). That is, in the application information storage unit 211, a value of the service connecting destination which is stored in correlation with an application ID matching with the application ID in the application connecting destination information is updated in the service connecting destination in the application connecting destination information. As a result, when the next access is performed, the updated service connecting destination is used as an access destination. Notifications of plural pieces of the application connecting destination information may be performed.

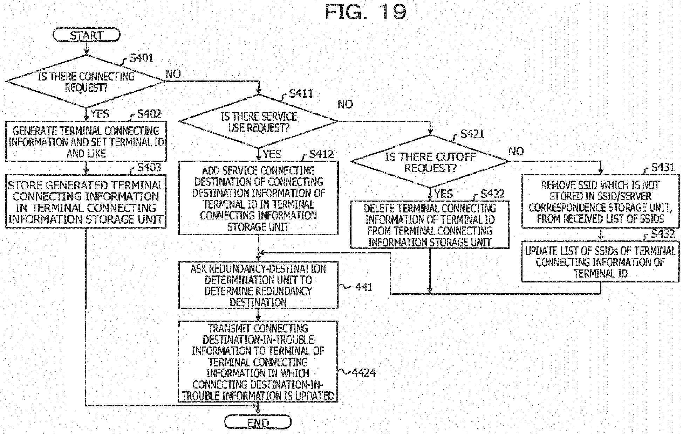

A process performed by the server 10 will be described. FIG. 19 is a flowchart illustrating an example of processing procedures performed by the terminal connecting management unit. The terminal connecting management unit 12 is operated based on a request from the connecting management unit 23 of the terminal 20. The request from the connecting management unit 23 corresponds to a connecting request which is transmitted in Step S103 of FIG. 12, a use request of the service 11 which is transmitted in Step S203 of FIG. 14, a cutoff request, and an update request of an SSID list which is transmitted in Step S232 of FIG. 14. The cutoff request will be described later.

If the terminal connecting management unit 12 receives the connecting request transmitted from the connecting management unit 23 of the terminal 20 in Step S103 of FIG. 12 (YES in S401), the terminal connecting management unit 12 generates new terminal connecting information and sets a terminal ID and the like which are included in the connecting request, in the generated terminal connecting information (S402).

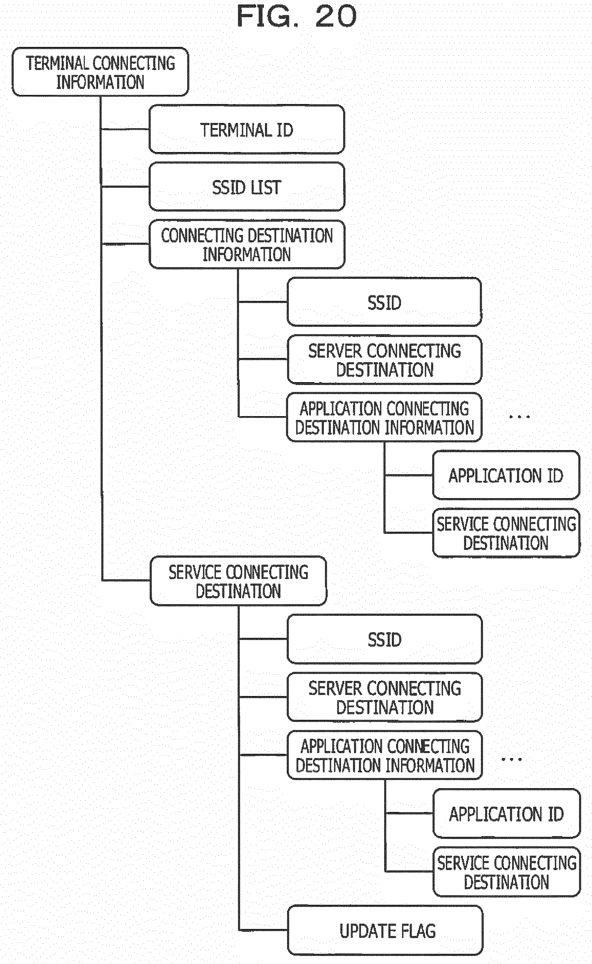

FIG. 20 illustrates a configuration example of the terminal connecting information. The terminal connecting information corresponds to information generated for each of the terminals 20 which are coupled to the server 10. The terminal connecting information includes items of a terminal ID, an SSID list, connecting destination information, connecting destination-in-trouble information, and the like. The terminal ID corresponds to a terminal ID of the terminal 20 corresponding to the terminal connecting information. The SSID list corresponds to a list of SSIDs detected by the terminal 20 relating to the terminal ID.

The connecting destination information corresponds to information regarding the current connecting destination of the terminal 20 relating to the terminal ID. The connecting destination information includes an SSID, a server connecting destination, application connecting destination information, and the like. The SSID corresponds to an SSID of an access point AP of the current connecting destination of the terminal 20 relating to the terminal ID. The server connecting destination corresponds to an IP address, a URL, or the like of the server 10 set as the current connecting destination of the terminal 20 relating to the terminal ID. The application connecting destination information corresponds to information indicating the service 11 set as a connecting destination of each of the applications 21 which is operated in the terminal 20 relating to the terminal ID. The configuration of the application connecting destination information is similar to that in FIG. 16. The application connecting destination information is included in the connecting destination information for each of the applications 21 which is operated in the terminal 20.

The connecting destination-in-trouble information corresponds to information regarding a connecting destination when the server 10 relating to the connecting destination information is in a trouble. The connecting destination-in-trouble information has a basic configuration which is the same as that in FIG. 16. However, the connecting destination-in-trouble information belonging to the terminal connecting information is different from that in FIG. 16 in that the connecting destination-in-trouble information belonging to the terminal connecting information includes an update flag. The update flag corresponds to a flag used for determining whether or not the connecting destination-in-trouble information is updated in a process performed by the redundancy-destination determination unit 13 (which will be described later). In a case where the connecting destination-in-trouble information is updated by the redundancy-destination determination unit 13, the value of the update flag is changed to be true. The number of pieces of application connecting destination information in the connecting destination information belonging to the terminal connecting information is the same as the number of pieces of application connecting destination information in the connecting destination-in-trouble information belonging to the terminal connecting information. This is because redundancy is performed for each of the services 11 relating to the former application connecting destination information and information relating to the service 11 as a redundancy destination is the latter application connecting destination information. That is, the former application connecting destination information and the latter application connecting destination information form a pair.

In Step S402, a value is set in the terminal ID of the terminal connecting information. An SSID corresponding to the server 10, and an IP address, a URL, or the like of the server 10 are set in each of the SSID and the server connecting destination in the connecting destination information of the terminal connecting information. Values of other items in the terminal connecting information are set in processes which will be described later.

The terminal connecting management unit 12 stores the generated terminal connecting information in the terminal connecting information storage unit 121 (S403). The terminal connecting information storage unit 121 stores the terminal connecting information for each of the terminals 20 coupled to the server 10.

If the terminal connecting management unit 12 receives the use request of the service 11 which has been transmitted from the connecting management unit 23 of the terminal 20 in Step 5203 of FIG. 14 (YES in S411), the terminal connecting management unit 12 adds new application connecting destination information to the connecting destination information of the terminal connecting information (FIG. 20) relating to a terminal ID included in the use request, in the terminal connecting information storage unit 121. The terminal connecting management unit 12 sets an application ID and a service connecting destination which are included in the use request, in the application connecting destination information (S412). At this time, application connecting destination information which forms a pair along with the application connecting destination information is not added to the connecting destination-in-trouble information in the terminal connecting information. The application connecting destination information which forms a pair is added when the service 11 relating to the use request in Step S412 is subjected to redundancy.

The terminal connecting management unit 12 asks the redundancy-destination determination unit 13 to determine a redundancy destination (S441). The redundancy-destination determination unit 13 determines the redundancy destination based on a list of pieces of the terminal connecting information stored in the terminal connecting information storage unit 121. The connecting destination-in-trouble information in any of pieces of the terminal connecting information may be changed depending on the determination of the redundancy destination. This is because the connecting destination when a trouble occurs is changed in accordance with an increase of the number of terminals 20 which use the service 11, as illustrated in FIG. 5. In this case, the update flag of the updated connecting destination-in-trouble information is changed to be true.

If the redundancy-destination determination unit 13 ends the process, the terminal connecting management unit 12 specifies terminal connecting information in which the update flag of the connecting destination-in-trouble information is true, among pieces of the terminal connecting information stored in the terminal connecting information storage unit 121, and the terminal connecting management unit 12 transmits connecting destination-in-trouble information in the specified terminal connecting information to a terminal 20 relating to a terminal ID in the specified terminal connecting information (S442). The terminal connecting management unit 12 changes the update flag of the transmitted connecting destination-in-trouble information to be false. The connecting destination-in-trouble information which is transmitted at this time is received in Step S211 of FIG. 14.

If the terminal connecting management unit 12 receives the cut-off request transmitted from the connecting management unit 23 of the terminal 20 (YES in S421), the terminal connecting management unit 12 deletes the terminal connecting information (FIG. 20) which is included in the cut-off request and relates to the terminal ID, from the terminal connecting information storage unit 121 (S422). Then, the processes of Steps S441 and S442 are performed. This is because cutoff of any terminal 20 may cause a connecting destination when another terminal 20 is in a trouble to be changed, as illustrated in FIG. 7.

If the terminal connecting management unit 12 receives the update request of the SSID list, which is transmitted in Step S232 of FIG. 14 (NO in S421), the terminal connecting management unit 12 removes an SSID which correspond to no server 10, from the received list of SSIDs with reference to the SSID/server correspondence storage unit 122 (S431).

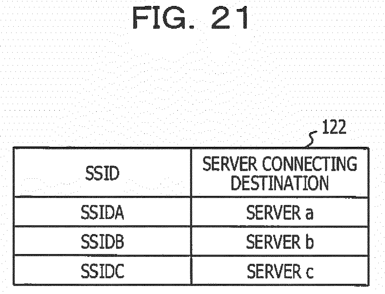

FIG. 21 illustrates a configuration example of the SSID/server correspondence storage unit. As illustrated in FIG. 21, the SSID/server correspondence storage unit 122 stores an SSID corresponding to the server 10 and a server connecting destination relating to the server 10, which correspond to each other, for each of the servers 10. "SERVER a", "SERVER b", and "SERVER c" in FIG. 21 respectively indicate IP addresses, URLs, or the like of the server 10a, the server 10b, and the server 10c in practice.

Accordingly, it is recognized that an SSID which is not stored in the SSID/server correspondence storage unit 122 is not the SSID of the server 10. Thus, in Step S431, an SSID which does not correspond to the server 10 is removed from the received list of SSIDs. At this time, the SSID corresponding to the server 10 (the own server 10) is also removed from the received list of SSIDs.

The terminal connecting management unit 12 updates the SSID list in the terminal connecting information relating to the terminal ID which is included in the received update request, in the terminal connecting information storage unit 121, by using a list of SSIDs after the process of Step S431 is performed (S432).

Then, the processes of Steps S441 and S442 are performed. This is because a connecting destination used when another terminal 20 is in a trouble may be changed even in a case where an SSID detected by the terminal 20 is changed.

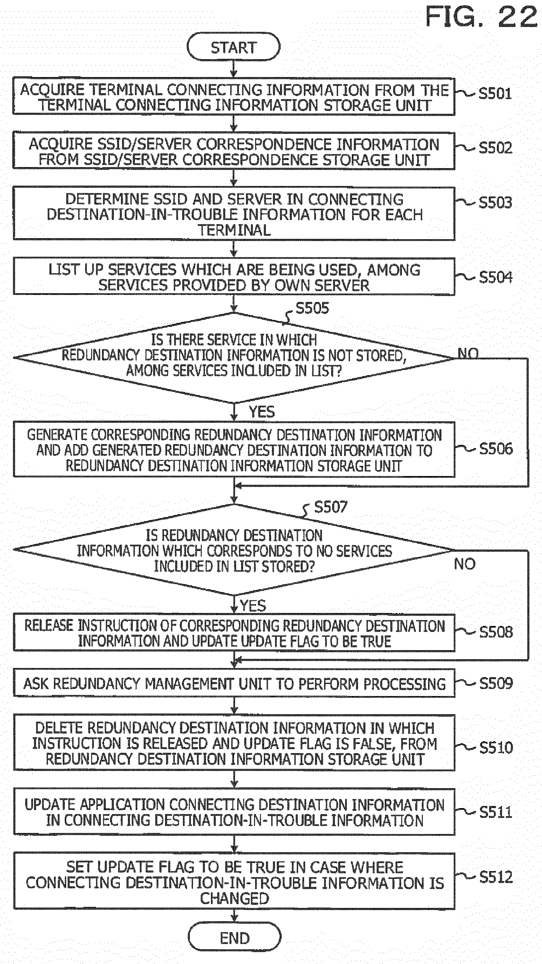

A process performed by the redundancy-destination determination unit 13 will be described. FIG. 22 is a flowchart illustrating an example of processing procedures performed by the redundancy-destination determination unit. The redundancy-destination determination unit 13 is operated based on the request from the terminal connecting management unit 12 in Step S441 of FIG. 19. That is, as in a case where the SSID detected by the terminal 20 which is coupled to the server 10 is changed or a new terminal 20 which uses the service 11 is recognized, any change occurs in an environment of the terminal 20, the configuration of the terminal 20 coupled to the server 10, or the like, the process in FIG. 22 is performed.

In Step S501, the redundancy-destination determination unit 13 acquires all pieces of the terminal connecting information from the terminal connecting information storage unit 121. The redundancy-destination determination unit 13 acquires correspondence information between an SSID and a server connecting destination, from the SSID/server correspondence storage unit 122 (S502).

The redundancy-destination determination unit 13 determines an SSID of a connecting destination used when a trouble occurs, and a server connecting destination (substitute server) based on the value of the SSID list in each of the pieces of the terminal connecting information, for each of the pieces of the terminal connecting information (that is, for each of the terminals 20) (S503). As the SSID of the connecting destination of a certain terminal 20 when a trouble occurs, any SSID may be used as long as the SSID of the connecting destination of a certain terminal 20 when a trouble occurs corresponds to an SSID included in the SSID list of the terminal connecting information relating to the terminal 20. A server 10 corresponding to the SSID of the connecting destination when a trouble occurs may be selected as the substitute server. The SSID and the server connecting destination may be determined based on a predetermined rule.

For example, the SSID of the connecting destination may be determined based on details of the SSID which is included in the SSID list of the terminal connecting information. As an example, an SSID which is detected by the most terminals 20 may be preferentially selected. This is an example in which it is determined that the server 10 which is near to many terminals 20 performing substitution causes efficiency of the network to be improved. In this case, a server 10 corresponding to the SSID is determined as the substitute server. However, regarding the terminal 20 which does not enable detection of the SSID, the other SSID is selected from SSIDs detected by the terminal 20. A server 10 corresponding to an SSID which is detected by the most terminals 20 is selected as the substitute server. In this case, the server 10 relating to the other SSID is used for routing an access to the substitute server.

As another example, the substitute destination may be determined based on a use state (load state) of each of the servers 10 as the redundancy destination, or the degree of congestion of wireless communication. In a case where the substitute destination is determined based on the use state of each of the servers 10 as the redundancy destination, information (for example, terminal connecting information stored in each of the servers 10) which indicates the use state of each of the servers 10 may be exchanged between the servers 10. In this case, the use state (load state) of the server 10 may be determined based on the number of pieces of terminal connecting information stored in each of the servers 10. In addition, information regarding load of the CPU 104 of the server 10 and the like may be exchanged between the servers 10. A SSID detected by the terminal 20 can be specified based on the SSID list in the terminal connecting information corresponding to each of the terminals 20.

The SSID and the server connecting destination which are determined for each of the pieces of the terminal connecting information in Step S503 are respectively set in the SSID and the server connecting destination in the connecting destination-in-trouble information of each of the pieces of the terminal connecting information. In a case where values to be set are the same as those of the SSID and the server connecting destination which have been already set in the connecting destination-in-trouble information, the connecting destination-in-trouble information may not be updated.

The redundancy-destination determination unit 13 lists up a service connecting destination corresponding to the service 11 which is currently used (is set as an access target), among the services 11 provided by the own server 10 (S504). The currently-used service 11 may be specified with reference to the service connecting destination in the application connecting destination information of the connecting destination information in each of the pieces of the terminal connecting information. In Step S504, a list in a state where duplication of the service connecting destination is removed is generated. This generated list is referred to as "a service list" below.

The redundancy-destination determination unit 13 determines whether or not there is a service connecting destination in which the redundancy destination information corresponding to the service connecting destination is not stored in the redundancy destination information storage unit 123, among service connecting destinations included in the service list (S505).

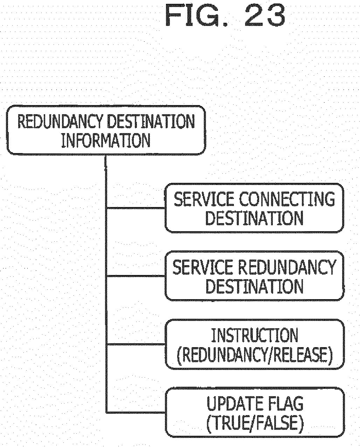

FIG. 23 is a diagram illustrating a configuration example of the redundancy destination information. The redundancy destination information corresponds to information indicating a redundancy destination and the like of each of the services 11 which are used. The redundancy destination information is generated for each of the services 11 which are used. As illustrated in FIG. 23, the redundancy destination information includes items of a service connecting destination, a service redundancy destination, an instruction (redundancy /release), an update flag (true/false), and the like.

The service connecting destination corresponds to a destination of the service 11 which is used (that is, service 11 set as a target of redundancy). The service redundancy destination corresponds to a destination (for example, a URL) indicating a redundancy destination of the service 11 which is used. The instruction corresponds to an instruction for the redundancy management unit 14, which indicates whether redundancy indicated by the redundancy destination information is performed or released. "Redundancy" or "release" is set for the instruction. The update flag is a flag indicating whether or not the redundancy destination information is updated.

In a case (YES in S505) where a service connecting destination in which redundancy destination information corresponding to the service connecting destination is not stored in the redundancy destination information storage unit 123 is referred to as "a target service connecting destination" below, and the target service connecting destination is presence among the service connecting destinations included in the service list, the redundancy-destination determination unit 13 generates new redundancy destination information and causes the generated redundancy destination information to be stored in the redundancy destination information storage unit 123 (S506). The target service connecting destination is set in the service connecting destination of the redundancy destination information. A destination of the service 11 which is determined newly as the redundancy destination is set in the service redundancy destination of the redundancy destination information. For example, the service connecting destination may be set in the service redundancy destination based on a server connecting destination corresponding to any SSID which is included in the SSID list of the terminal connecting information in which the target service connecting destination is included in the service connecting destination of the application connecting destination information in the connecting destination information, among each of the pieces of the terminal connecting information (FIG. 20). The server connecting destination corresponding to the SSID may be specified with reference to the SSID/server correspondence storage unit 122.

"Redundancy" is set in the instruction of the newly-generated redundancy destination information. "True" is set in the update flag. The process of Step S506 is performed when use of a new service 11 starts in the server 10. The new service 11 refers to the service 11 which has not been used until now.

The redundancy-destination determination unit 13 determines whether or not redundancy destination information which corresponds to no service connecting destination included in the service list is stored in the redundancy destination information storage unit 123 (S507). That is, it is determined whether or not redundancy destination information of the service 11 which has been not used. In a case where the corresponding redundancy destination information is stored (YES in S507), the redundancy-destination determination unit 13 sets the instruction of the redundancy destination information to be "release" and sets the update flag of the redundancy destination information to be "true" (S508).

The redundancy-destination determination unit 13 asks the redundancy management unit 14 to perform processing (S509). The redundancy management unit 14 performs redundancy of the service 11 or releases the redundancy based on the redundancy destination information stored in the redundancy destination information storage unit 123, as will be described later.

If the process is ended by the redundancy management unit 14, the redundancy-destination determination unit 13 removes redundancy destination information in which the instruction is "release" and the update flag is "true" from the redundancy destination information storage unit 123 (S510). The redundancy-destination determination unit 13 updates application connecting destination information of the connecting destination-in-trouble information in the connecting destination information of the terminal connecting information (referred to as "target terminal connecting destination information" below), for each of the pieces of the terminal connecting information (FIG. 20) (S511). Specifically, the redundancy-destination determination unit 13 searches for redundancy destination information from the redundancy destination information storage unit 123, regarding application connecting destination information of the connecting destination information in the target terminal connecting destination information. The redundancy destination information to be searched for includes a service connecting destination which is the same as a service connecting destination of the application connecting destination information (referred to as "target application connecting destination information" below). In a case where connecting destination-in-trouble information in the target terminal connecting destination information includes application connecting destination information which includes an application ID the same as an application ID of the target application connecting destination information, the redundancy-destination determination unit 13 sets a service redundancy destination of the searched redundancy destination information as a service connecting destination of the application connecting destination information. In a case where the connecting destination-in-trouble information in the target terminal connecting destination information does not include the application connecting destination information which includes an application ID the same as an application ID of the target application connecting destination information, the redundancy-destination determination unit 13 adds application connecting destination information to the connecting destination-in-trouble information. The application connecting destination information to be added includes the application ID in the target application connecting destination information and uses the service redundancy destination of the searched redundancy destination information as the service connecting destination.

The redundancy-destination determination unit 13 sets the update flag in the connecting destination-in-trouble information in which any item is updated in Step S503 or Step S511 among connecting destination-in-trouble information of the pieces of the terminal connecting information, to be "true" (S512). Here, the connecting destination-in-trouble information in which the update flag is set to be "true" is transmitted to a terminal 20 relating to a terminal ID in terminal connecting information which includes the connecting destination-in-trouble information, in Step S442 of FIG. 19.

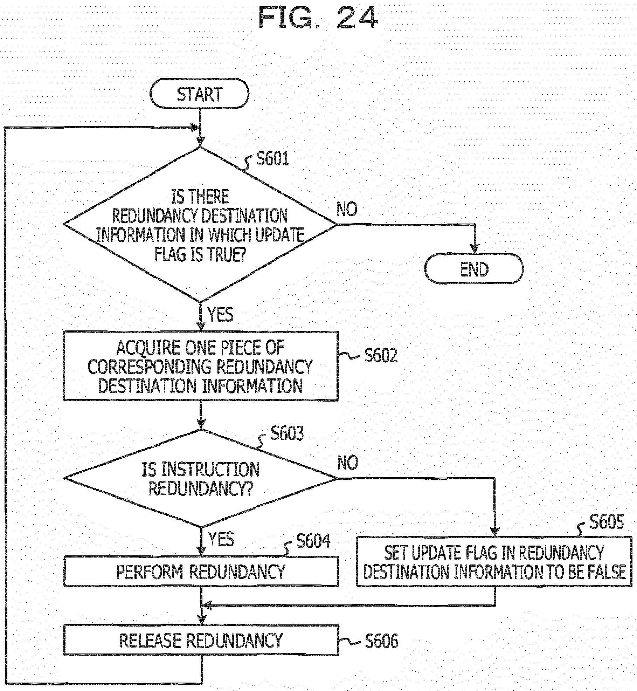

A process performed by the redundancy management unit 14 will be described. FIG. 24 is a flowchart illustrating an example of processing procedures performed by the redundancy management unit. The redundancy management unit 14 is operated based on the request from the redundancy-destination determination unit 13, in Step S509 of FIG. 22.

In Step S601, the redundancy management unit 14 determines whether or not redundancy destination information in which the value of the update flag is "true" is stored in the redundancy destination information storage unit 123 (S601). In a case where one or more pieces of the corresponding redundancy destination information are stored (YES in S601), the redundancy management unit 14 acquires one of the pieces of the corresponding redundancy destination information (S602). The acquired redundancy destination information is referred to as "target redundancy destination information" below.

The redundancy management unit 14 determines whether or not the value of the instruction of the target redundancy destination information is "redundancy" (S603). In a case where the value of the instruction is "redundancy" (YES in S603), the redundancy management unit 14 causes the service 11 relating to the service connecting destination of the target redundancy destination information to be redundant in a destination indicated by a service redundancy destination of the target redundancy destination information (S604). In a case where the instruction is "release" (NO in S603), the redundancy management unit 14 releases redundancy of the service 11 specified by using the service redundancy destination of the target redundancy destination information (S605). The redundancy management unit 14 sets the update flag in the target redundancy destination information to be "false" (S606), and causes the processes subsequent to the process of Step S601 to be repeated. In Step S601, in a case where the corresponding redundancy destination information is not stored (NO in S601), the process in FIG. 24 is ended.

Redundancy or a release of the redundancy may be performed by using a known technology. For example, regarding redundancy, a method in which the service 11 is prepared in a deployable form such as Docker or Servlet, the prepared service 11 is deployed in the redundancy destination when redundancy is performed, and after a start of the redundancy, the state of the service 11 is synchronized may be employed. A method in which a history of an access to the service 11 is held by the proxy unit 22, the history which is held is replayed for the service 11 as the redundancy destination when the server 10 is in a trouble, and thus, regarding the service 11 as the redundancy destination, a state of the original service 11 before a trouble occurs is reproduced may be employed. Other known methods may be employed.

A process performed when use of the application 21 is ended will be described. The application 21 notifies the proxy unit 22 of an end of the application 21 before the application 21 is ended. This notification includes an application ID of the application 21. The proxy unit 22 deletes application information relating to the application ID from the application information storage unit 211 and notifies the connecting management unit 23 of an end of the application 21 relating to the application ID. The connecting management unit 23 deletes application connecting destination information including the application ID from connecting destination-in-trouble information (FIG. 16) stored in the connecting destination-in-trouble information storage unit 212. The connecting management unit 23 transmits an end notification of the application 21 to the terminal connecting management unit 12 of the server 10 as the connecting destination. The end notification of the application 21 includes a terminal ID of the terminal 20 and the application ID.

If the terminal connecting management unit 12 receives the end notification of the application 21, the terminal connecting management unit 12 acquires terminal connecting information (FIG. 20) including the terminal ID which is included in the end notification, from the terminal connecting information storage unit 121. The terminal connecting management unit 12 deletes application connecting destination information including the application ID which is included in the end notification, from connecting destination information of the acquired terminal connecting information. The terminal connecting management unit 12 asks the redundancy-destination determination unit 13 to perform processing. The redundancy-destination determination unit 13 performs the processing procedures described in FIG. 22, in response to the request. As a result, in a case where a certain service 11 is not used due to the end of the application 21, the process of Step S508 of FIG. 22 is performed. An effect of performing causes redundancy of the service 11 to be released in the process of FIG. 24. In a case where the service 11 is used through another application 21 or another terminal 20, the process of Step S508 is not performed. Thus, the redundancy of the service 11 continues to be performed. If connecting destination-in-trouble information in any piece of the terminal connecting information stored in the terminal connecting information storage unit 121 is updated by performing the process in FIG. 22, the terminal connecting management unit 12 transmits the connecting destination-in-trouble information to a terminal 20 relating a terminal ID in the terminal connecting information. The connecting management unit 23 of the terminal 20, which has received the connecting destination-in-trouble information performs the processes of Steps S212 and S213 in FIG. 14.

With this configuration, when the application 21 is ended, redundancy of the service 11 which has not been used is released.

A process performed when the terminal 20 cuts off connecting with the server 10. For example, if a cutoff instruction is input by a user, the connecting management unit 23 of the terminal 20 designates the terminal ID of the terminal 20 and transmits a cutoff request to the terminal connecting management unit 12 of the server 10 as the connecting destination. The connecting management unit 23 deletes connecting destination-in-trouble information from the connecting destination-in-trouble information storage unit 212.

The terminal connecting management unit 12 of the server 10 as the connecting destination performs the processes of Steps S422, S441, and S442 in FIG. 19, in response to the cutoff request. As a result, in a case where the service 11 used by the terminal 20 has not been used, the process of Step S508 in FIG. 22 is performed. An effect of performing causes redundancy of the service 11 to be released in the process of FIG. 24. Redundancy of the service 11 used by another terminal 20 continues to be performed.

With this configuration, when the terminal 20 cuts off the connecting with the server 10, redundancy of the service 11 which has not been used is released.

As described above, according to the embodiment, the server 10 which provides the service 11 causes service 11 to be redundant in accordance with a start of use of the service 11 by the terminal 20. Thus, it is possible to improve efficiency of redundancy of the service 11 in comparison to a case where the service 11 is continuously subjected to redundancy in the substitute server. The redundancy destination is automatically determined based on an SSID detected by the terminal 20, a load state of each of the servers 10, or the like. The terminal 20 is notified of the determined redundancy destination. Accordingly, it is possible to improve flexibility of redundancy of the service 11.

If all of terminals 20 which use the service 11 end the service 11, redundancy of the service 11 is released. From such a point, it is also possible to improve efficiency of the redundancy of the service 11.

In the embodiment, an example in which identification information of each wireless communication network, which is detected by the terminal 20 is an SSID is described. However, the identification information may be appropriately changed in accordance with a method of the wireless communication. For example, a BSSID or a MAC address may be used as the identification information. The method of the wireless communication is not limited to a wireless LAN. Other communication methods such as Bluetooth (registered trademark) may be used.

In this embodiment, the server 10 is an example of an information processing apparatus. The terminal connecting management unit 12 is an example of a reception unit and a transmission unit. The connecting-destination determination unit 13 is an example of a determination unit. The redundancy management unit 14 is an example of a redundancy unit.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Hitherto, the examples of the embodiment are described in detail. However, the invention is not limited to a specific embodiment and various modifications and changes may be applied in a range of the gist of the invention described in the claims.

### [REFERENCE SIGNS LIST]

10, 10a, 10b, 10c SERVER
11 SERVICE
12 TERMINAL CONNECTING MANAGEMENT UNIT
13 REDUNDANCY-DESTINATION DETERMINATION UNIT
14 REDUNDANCY MANAGEMENT UNIT
20, 20a, 20b, 20c TERMINAL
21 APPLICATION
22 PROXY UNIT
23 CONNECTING MANAGEMENT UNIT
100 DRIVE DEVICE
101 RECORDING MEDIUM
102 AUXILIARY STORAGE DEVICE
103 MEMORY DEVICE
104 CPU
105 INTERFACE DEVICE
121 TERMINAL CONNECTING INFORMATION STORAGE UNIT
122 SSID/SERVER CORRESPONDENCE STORAGE UNIT
123 REDUNDANCY DESTINATION INFORMATION STORAGE UNIT
211 APPLICATION INFORMATION STORAGE UNIT
212 CONNECTING DESTINATION-IN-TROUBLE INFORMATION STORAGE UNIT
213 APPLICATION CONNECTING-DESTINATION STORAGE UNIT
214 CONNECTING DESTINATION INFORMATION STORAGE UNIT
B BUS

## Claims

1. A service redundancy method performed by any first information processing apparatus of a plurality of information processing apparatuses (10) coupled to each other, the service redundancy method comprising:
receiving identification information of each wireless communication network, the identification information being detected by a terminal (20) coupled to the first information processing apparatus (10a) through wireless communication;
determining another information processing apparatus (10b, 10c) from the plurality of information processing apparatuses which corresponds to the received identification information and is different from the first information processing apparatus, to be a substitute destination of a service provided for the terminal by the first information processing apparatus;
causing the service to be redundant in the determined substitute destination in accordance with a start of use of the service by the terminal (20); and
performing a process in which information indicating the other information processing apparatus is transmitted to the terminal, and
wherein the terminal is coupled to the other information processing apparatus in a case where use of the first information processing apparatus is not allowed.

2. The service redundancy method according to claim 1, wherein
the receiving receives the identification information of each wireless communication network, which is detected by each of a plurality of terminals (20) which use the service, from the plurality of terminals, and
the determining determines the substitute destination of the service based on at least one of a use state of the information processing apparatus corresponding to each of plural pieces of identification information, and the identification information received from the plurality of terminals, in a case where
the plural pieces of identification information corresponding to the other information processing apparatus are received.

3. The service redundancy method according to claim 1 or 2, further comprising:
releasing redundancy of the service in a case where all terminals which use the service end the use of the service.

4. A program which, when executed on an information processing apparatus, causes the information processing apparatus to carry out the service redundancy method according to any of claims 1 to 3.

5. A storage medium storing the program of claim 4.

6. An information processing apparatus (10) comprising:
a memory configured to store the program according to claim 4; and
a processor coupled to the memory and configured to execute the program in the memory.

7. A system comprising: a first information processing apparatus (10) according to claim 6; and in a case where use of the first information processing apparatus is not allowed, another information processing apparatus coupled to the terminal.

## Patentansprüche

1. Dienstredundanzverfahren, das von irgendeinem ersten Informationsverarbeitungsgerät einer Vielzahl von Informationsverarbeitungsgeräten (10), die miteinander verbunden sind, ausgeführt wird, Dienstredundanzverfahren umfassend:
Empfangen von Identifikationsinformationen jedes drahtlosen Kommunikationsnetzwerks, wobei die Identifikationsinformationen von einem Endgerät (20), das mit dem ersten Informationsverarbeitungsgerät (10a) durch drahtlose Kommunikation verbunden ist, erfasst werden;
Bestimmen eines anderen Informationsverarbeitungsgeräts (10b, 10c) aus der Vielzahl von Informationsverarbeitungsgeräten, das den empfangenen Identifikationsinformationen entspricht und anders ist als das erste Informationsverarbeitungsgerät, um ein Ersatzzielort eines Dienstes zu sein, der für das Endgerät von dem ersten Informationsverarbeitungsgerät bereitgestellt wird;
Veranlassen, dass der Dienst in dem bestimmten Ersatzzielort in Übereinstimmung mit einem Beginn der Nutzung des Dienstes durch das Endgerät (20) redundant ist, und
Ausführen eines Prozesses, bei dem Informationen, die das andere Informationsverarbeitungsgerät angeben, zu dem Endgerät übertragen werden, und
wobei das Endgerät mit dem anderen Informationsverarbeitungsgerät in einem Fall verbunden ist, in dem der Gebrauch des ersten Informationsverarbeitungsgeräts nicht erlaubt ist.

2. Dienstredundanzverfahren nach Anspruch 1, wobei das Empfangen die Identifikationsinformationen jedes drahtlosen Kommunikationsnetzwerkes, das von jedem der Vielzahl von Endgeräten (20), die den Dienst benutzen, aus der Vielzahl von Endgeräten erfasst wird, empfangen wird, und
das Bestimmen den Ersatzzielort des Dienstes basierend auf mindestens dem Verwendungszustand des Informationsverarbeitungsgeräts, das jedem von mehreren Teilen von Identifikationsinformationen entspricht, und/oder den Identifikationsinformationen, die von der Vielzahl von Endgeräten empfangen werden, in einem Fall, in dem die mehreren Teile von Identifikationsinformationen, die dem anderen Informationsverarbeitungsgerät entsprechen, empfangen werden, bestimmt.

3. Dienstredundanzverfahren nach Anspruch 1 oder 2, ferner umfassend:
Freigeben der Redundanz des Dienstes in einem Fall, in dem alle Endgeräte, die den Dienst verwenden, den Gebrauch des Dienstes beenden.

4. Programm, das, wenn es auf einem Informationsverarbeitungsgerät ausgeführt wird, das Informationsverarbeitungsgerät veranlasst, das Dienstredundanzverfahren nach einem der Ansprüche 1 bis 3 auszuführen.

5. Speichermedium, das das Programm des Anspruchs 4 speichert.

6. Informationsverarbeitungsgerät (10), umfassend:
einen Speicher, der konfiguriert ist, um das Programm gemäß Anspruch 4 zu speichern, und
einen Prozessor, der mit dem Speicher verbunden und konfiguriert ist, um das Programm in dem Speicher auszuführen.

7. System, umfassend:
ein erstes Informationsverarbeitungsgerät (10) nach Anspruch 6, und
in einem Fall, in dem der Gebrauch des ersten Informationsverarbeitungsgeräts nicht erlaubt ist, ein anderes Informationsverarbeitungsgerät, das mit dem Endgerät verbunden ist.

## Revendications

1. Procédé de redondance de service effectuée par un quelconque premier appareil de traitement d'informations d'une pluralité d'appareils de traitement d'informations (10) couplés les uns aux autres, le procédé de redondance de service comprenant les étapes consistant à :
recevoir des informations d'identification de chaque réseau de communication sans fil, les informations d'identification étant détectées par un terminal (20) couplé au premier appareil de traitement d'informations (10a) via une communication sans fil ;
déterminer un autre appareil de traitement d'informations (10b, 10c) à partir de la pluralité d'appareils de traitement d'informations correspond aux informations d'identifications reçue et qui est différent du premier appareil de traitement d'informations, pour être une destination de remplacement d'un service fourni au terminal par le premier appareil de traitement d'informations ;
amener le service à être redondant dans la destination de remplacement déterminée conformément à un début d'utilisation du service par le terminal (20) ; et
exécuter un processus dans lequel des informations indiquant l'autre appareil de traitement d'informations sont transmises au terminal, et
dans lequel le terminal est couplé à l'autre appareil de traitement d'informations dans un cas où une utilisation du premier appareil de traitement d'informations n'est pas autorisée.

2. Procédé de redondance de service selon la revendication 1, dans lequel
la réception consiste à recevoir les informations d'identification de chaque réseau de communication sans fil, que détecte chacun d'une pluralité de terminaux (20) qui utilisent le service, parmi la pluralité de terminaux, et
la détermination consiste à déterminer la destination de remplacement du service sur la base d'au moins un parmi un état d'utilisation de l'appareil de traitement d'informations correspondant à chacune des multiples pièces d'informations d'identification, et des informations d'identification reçues à partir de la pluralité de terminaux, dans un cas où
les plusieurs pièces d'informations d'identification correspondant à l'autre appareil de traitement d'informations sont reçues.

3. Procédé de redondance de service selon la revendication 1 ou 2, comprenant en outre :
La libération de redondance du service dans un cas où tous les terminaux qui utilisent le service terminent l'utilisation du service.

4. Programme qui, lorsqu'il est exécuté sur un appareil de traitement d'informations, amène l'appareil de traitement d'informations à effectuer le procédé de redondance de service selon l'une quelconque des revendications 1 à 3.

5. Support de stockage stockant le programme selon la revendication 4.

6. Appareil de traitement d'informations (10) comprenant :
une mémoire configurée pour stocker le programme selon la revendication 4 ; et
un processeur couplé à la mémoire et configuré pour exécuter le programme dans la mémoire.

7. Système comprenant :
un premier appareil de traitement d'informations (10) selon la revendication 6 ; et
dans un cas où une utilisation du premier appareil de traitement d'informations n'est pas autorisée, l'autre appareil de traitement d'informations couplé au terminal.
